# EUROPÄISCHE PATENTSCHRIFT

(11) **EP 0 655 490 B1**
(45) Veröffentlichungstag und Bekanntmachung des Hinweises auf die Patenterteilung: **18.06.1997**
(21) Anmeldenummer: 94117423.7
(22) Anmeldetag: 04.11.1994
(51) Int. Cl.: C09J 151/00, C08F 265/02

(54) **Repulpierbarer Haftkleber**
Repulpable pressure sensitive adhesive
Adhésif recyclable sensible à la pression

(30) Priorität: 26.11.1993 DE 4340297
(43) Veröffentlichungstag der Anmeldung: 31.05.1995
(73) Patentinhaber: Beiersdorf Aktiengesellschaft, D-20245 Hamburg (DE)
(72) Erfinder: Gleichenhagen, Peter, Dr., D-22417 Hamburg (DE); Westphal, Andreas, D-22049 Hamburg (DE)

(56) Entgegenhaltungen:
- US-A- 4 443 576

## Beschreibung

Die Erfindung bezieht sich auf repulpierbare Haftklebstoffe und damit ausgerüstete Bänder, Etiketten oder andere haftklebende Artikel und Zubereitungen. Diese werden vorrangig in der Papier erzeugenden und verarbeitenden Industrie als repulpierbare, recyclingfähige Produkte verwendet.

Verfahrensabläufe bei der Papierherstellung, Veredelung und Bedruckung erfordern häufig ein Spleißen von Papierbahnen, wenn z.B. an Beschichtungsanlagen oder Druckmaschinen die Bahn eines neu einzuziehenden Papierballens an die aus-laufende Bahn eines bereits bearbeiteten Ballens geklebt werden soll. Die mechanischen Belastungen dieser Spleiße können sehr unterschiedlich sein. Wird der Spleißvorgang z.B. im fliegenden Wechsel durchgeführt, dann ist bei den heute üblichen Bahngeschwindigkeiten von bis zu 1500 m/min und bei geringem Verklebungsandruck (z.B. Luftbürste) der Einsatz eines aggressiv klebrigen weichen Haftklebefilms vorzusehen. Sollen hingegen Verklebungsstellen längere Zeit dimensionsstabil unter hohem Wickelzug und Druck im Papierballen verbleiben, dann ist ein harter scherfester Haftklebefilm erforderlich, der keine in das Papier penetrierende Anteile absondert. Generell wird eine möglichst geringe Spleißdicke angestrebt. Dadurch wird ein störungsfreier Prozeßablauf bei den verschiedenen Bearbeitungsvorgängen (Beschichten, Kalandern etc.) ermöglicht. Die geforderten klebtechnischen Eigenschaften müssen demzufolge von möglichst dünnen vorzugsweise stützträgerfreien Haftklebefilmen erfüllt werden. Neben diesen Extremen gibt es je nach Anwendungszweck Zwischenstufen. Ein einwandfreies Recycling der verklebten Papiere, frei von Stippen und Restklebrigkeit, muß über lange Alterungszeiten der Verklebung auch bei gelegentlichen Temperaturbelastungen gewährleistet sein. Die im Prozeßwasser der Papierfabriken und den Papieren vorhandenen mehrwertigen Kationen wie Ca⁺⁺, MG⁺⁺ und A1⁺⁺⁺, welche über Vernetzungsbrücken die Repulpierbarkeit der Klebmassen behindern können, dürfen keinen negativen Einfluß auf die cyclingfähigkeit der Verklebungen haben.

Es hat in der Vergangenheit eine Reihe von Entwicklungen gegeben, die darauf abzielten, die oben geschilderten Anforderungsprofile zu erfüllen. Zufriedenstellend ist dies nur in Teilaspekten gelungen, so daß bis heute ein Bedarf an einer verbesserten Gesamtlösung besteht.

Der erste bekannt gewordene Haftklebstoff dieser Art wird im US Patent 2,838,421 (Sohl), beschrieben. Er besteht aus Polyacrylsäure, die mit Polypropylenglykol zu einem wasserlöslichen Haftkleber weichgenacht wird. Das US Patent 3,441,430 (Peterson) beschreibt ein repulpierbares Klebeband, dessen Haftklebemasse aus einem Acrylsäure/Ethylacrylat Copolymer besteht, das mit wasserlöslichen Weichmachern mit mindestens einer Etherfunktion haftklebrig eingestellt ist.

Das US Patent 3,661,874 (Olson) beschreibt einen mit einem sek. Monoamin umgesetzten epoxidierten Kautschuk, der mit einem wasserlöslichen Weichmacher klebrig gemacht wird. Die OS 23 60 441 (Blake) beschreibt ein Copolymer aus Acrylsäureestern und Vinylcarbonsäuren, das mit flüssigen Polyoxiethylenverbindungen und/oder mit dem Reaktionsprodukt eines sauren Kolophoniumharzes mit einem Alkanolamin teilneutralisiert wird. Eine Erhöhung der Kohäsion des Haftklebers läßt sich durch Verwendung von ethoxilierten Diaminen erreichen, die zusammen mit ethoxilierten Monoaminen als klebrigmachende Weichmacher mit dem sauren Gerüstpolymer besonders gut verträglich sind, wie dies in dem DE Patent 31 05 894 (Gleichenhagen et al.) beschrieben wird.

In dem europäischen Patent 0 141 504 (Blake) wird eine repulpierbare Haftklebemasse beschrieben, die auch auf Durchschreibepapieren (Carbonless papers) eingesetzt werden kann und besonders penetrationsfest ist. Sie besteht aus einem Vinylcarbonsäure/Acrylsäureester Copolymer, das mit NaOH und/oder LiOH teilneutralisiert wird und mit Ethoxilierungsprodukten der Phosporsäure und Diaminen klebrig eingestellt wird.

Um die Spleißfestigkeit bei höheren Temperaturen zur verbessern, werden in der OS 39 01 690 und dem europäischen Patent 0 081 846 (Eskay) neben den bisher genannten Polymerbausteinen zusätzlich Acrylamide beansprucht. Dem gleichen Zweck dienen die in der DE-C 34 23 446 beschriebene Terpolymere aus N-Vinyllactamen oder N-Vinylsäureamiden, Acrylsäure und Alkylvinylethern. Die Verwendung von Acryloyloxipropionsäure anstelle von Acrylsäure, wie dies im Europäischen Patent 0 352 442 (Czech) beschrieben wird, verfolgt das gleiche Ziel. In der PCT/US 92/06731 wird ein Terpolymer beschrieben, das aus polaren Monomeren wie z.B. Säuren oder Hydroxy-alkylestern und weniger polaren Monomeren wie Alkylestern auf Acrylbasis und einem eine Vinylgruppe tragenden polymerisierbarem, wasserlöslichen Makromeren, vorzugsweise einem Polyethoxyloxazolin-, Poly-N-vinylpyrrolidon- oder Polyalkylenoxid-Derivat, besteht und mit wasserlöslichen Weichmachern zu einer Haftklebemasse abgemischt ist. Es ist im breiten pH-Bereich repulpierbar.

Ein häufiger Nachteil der beschriebenen Produkte beruht auf dem bereits erwähnten Gehalt mehrwertiger Kationen im Pulpwasser, deren Vernetzungspotential mit den Carboxylgruppen im repulpierbaren Haftkleber zur Stippenbildung (Stickies) beim Recycling führt. Diese sehr gravierende Störung erfolgt insbesondere dann, wenn zur Erzielung ausreichender Kohäsion im Haftkleber eine Teilvernetzung über Carboxylgruppen entsprechend den Angaben der Patentliteratur bereits enthalten ist und/oder durch Alterungsprozesse zwischen den funktionellen Gruppen erzeugt wurde, so daß an gealterten Produkten diese Störung in Verstärktem Maße auftritt.

Aufgabe der Erfindung war es, hier Abhilfe zu schaffen, insbesondere eine repulpierbare Haftklebemasse zu erstellen, die bereits in dünnen Schichtstärken hervorragende klebtechnische Eigenschaften hat, eine einwandfreie Repulpierbarkeit auch in harten Wässern gewährleistet und diese Eigenschaften über längere Zeiträume und bei kurzfristigen Temperaturbelastungen ohne Qualitätseinbuße beibehält.

Zur Lösung der Aufgabe wird ein repulpierbarer Haftkleber auf Basis eines Pfropfpolymeren erstellt, in welchem, bezogen auf das Pfropfcopolymere, 3 - 20 Gew.-% Vinylverbindungen mit sulfonsauren Salzgruppen auf ein Mischpolymer von (Meth)acrylestern und (Meth)acrylsäure aufgepfropft sind, enthaltend zudem wasserlösliche Weichmacher.
Bevorzugt sind folgende Anteile:
a) 100 Gew.-Teile eines Pfropfpolymerisats, das aus einem Copolymer von
   - 1) 15 - 95 Gew.%: Acrylsäure,
   - 2) 0 - 70 Gew.%: Acrylsäurealkylestern mit unverzweigten oder nur gering verzweigten Alkylresten aus 1 - 12 C-Atomen, vorzugsweise Acrylsäure-ethyl, -n-butyl,-2-ethylhexylester oder deren Gemische besteht, auf das
   - 3) 3 - 20 Gew.%: (Meth)acrylester, deren Alkylrest eine Sulfonsäure-Gruppe trägt, die innermolukular neutralisiert ist (Betain-Struktur) oder als Alkalisalz vorliegt, wobei beide Neutralisationsformen einzeln oder im Gemisch vorhanden sein können, mittels eines pfropfwirksamen Initiators aufgepfropft sind.
b) 80 - 280 Gew.-Teile eines wasserlöslichen Weichmachers. Bevorzugt sind ethoxilierte wasserlösliche Alkyl-monoamine, deren H-Atome an der Aminogruppe durch Ethoxisegmente substituiert sind und deren Schmelzbereiche deutlich unterhalb 0°C liegen. Neben diesen Weichmachern können auch bei Raumtemperatur flüssige Polyethylen- und Propylenglykole verwendet werden.

Bevorzugt sind ferner solche Haftkleber, die schwach vernetzt sind, ferner auch ein Haftkleber dadurch gekennzeichnet, daß er bei Raumtemperatur flüssige Polyethylenglykole, Polypropylenglykole, deren Mischungen oder Mischpolymerisate oder ethoxilierte bzw. propoxilierte Alkylamine mit Alkylresten von C₄-C₁₈ als Weichmacher enthält, sowie ein solcher, worin der Anteil an Weichmachern 40 - 75 Gew.-% im Haftklebefilm beträgt, sowie ein solcher, worin die enthaltenen Carboxylgruppen teilweise oder vollständig neutralisiert sind.

Die Pfropfpolymerisation mit den unter a) 3. beschriebenen (Meth)acrylesterderivaten bewirkt über die an die Polymerketten in möglichst statistischer Verteilung geknüpften sulfonsauren Salzstrukturen, eine fehlerfreie Repulpierbarkeit der Haftkleber auch in harten Wässern, die bereits mit unerwartet niedrigen Anteilen dieser Strukturen zu erzielen ist. Außerdem erhöhen Sulfobetainstrukturen in wünschenswerter Weise die Kohäsivität der Haftklebemasse, ohne die Repulpierbarkeit zu beeinträchtigen.

Durch das Pfropfverfahren werden die unerwünschten Einflüsse der stark unterschiedlichen Polymerisationsparameter und der sehr verschiedenen Löslichkeitsparameter zwischen den Monomergruppen a)2 und a)3 umgangen. Bei einer Terpolymerisation verursacht diese Unverträglichkeit der Monomeren eine inhomogene Verteilung der Monomersegmente zwischen den Polymerketten, die bis zur Phasentrennung zwischen den verschieden stark polaren Polymeren führen kann. Daraus resultieren Haftkleber, die neben gut repulpierbaren Anteilen auch schlechter repulpierbare Polymerketten enthalten. Letztere können dann als Keime die schädliche Stickie-Bildung in den Papiermaschinen auslösen.

Von den oben genannten Derivaten unter a)3. werden bevorzugt folgende Verbindungen eingesetzt:
1. 2-Propionic acid,3-sulfopropylester (3-Sulfopropyl)
   Acrylsäureester Kaliumsalz Abkürz.: SPA.
   (CAS-Nomenklatur)
2. 1-Propanaminium-N,N-dimethyl-N-1-2-[(2-methyl-1-oxo-2-propenyl)-oxo]-ethyl]-3 sulfo, hydroxide inner salt
   Abkürz.: SPE
   (CAS-Nomenklatur)

Die Sulfo-Gruppen tragenden Monomere werden in Form ihrer Salze eingesetzt, da vor allem diese längerfristig chemisch stabil und lagerfähig sind.

Die für die Pfropfung verwendeten Initiatoren liefern unter thermischem Zerfall Radikale, die aufgrund ihrer hohen Reaktionsfähigkeit H-Atome aus den Polymerketten unter Absättigung ab-, strahieren können und dadurch die Radikal funktion auf die Polymerketten übertragen. Das Kettenradikal reagiert danach unter Aufpfropfung mit dem zu pfropfenden Monomeren, wobei der Pfropfast entsprechend der Reaktionsfähigkeit des Monomeren und seiner Konzentration wächst.

Die Eignung der Initiatioren für eine hohe Pfropfausbeute wird nach folgendem Verfahren bestimmt:
Eine genau 0,1 molare Lösung des Initiators wird in n-Pentadecan unter He-Atmosphäre zersetzt. Die Reaktionszeit wird so gewählt, daß sie dem Zehnfachen der bei der gewählten Temperatur gegebenen Halbwertszeit des jeweiligen Initiators entspricht. Dadurch ist ein praktisch vollständiger Zerfall des Initiators gewährleistet. Anschließend wird der Anteil an entstandenem dimeren Pentadecan mittels GLC gemessen. Der prozentuale Anteil wird als Maß für die Pfropfwirksamkeit angegeben. Üblicherweise wählt man die Reaktionstemperatur so, daß die Halbwertszeit des zu prüfenden Initiators bei dieser Temperatur 15 min. beträgt. Die Methode beruht auf Veröffentlichungen von J.D. van Drumpt und H.H.J. Oosterwijk (Journal of Polymer Science, Polymer Chemistry edition Vol. 14, No. 6 June 1976, pp 1495-1511).

Für die vorliegende Verfahrensweise werden zur Pfropfung Initiatoren bevorzugt, die bei bereits relativ niedrigen Temperaturen hohe Pfropfausbeuten liefern. Besonders bevorzugt wird deshalb für die Pfropfreaktion mit den Monomeren der Gruppe a)3 das Bis-(4-T, Butylcyclohexyl)peroxidicarbonat (Handelsname der Firma Akzo Chemie: Perkadox 16), das bei 60°C bereit eine Pfropfwirksamkeit von 24 hat. Eine ähnliche Pfropfwirksamkeit von 28 wird mit Dibenzoylperoxid bei 92°C erreicht. Zwar kann mit Di-Cumylperoxid eine noch deutlich höhere Pfropfwirksamkeit von 51 erzielt werden, da dies aber erst bei 128°C erreicht wird, ist dessen Verwendung wegen vermehrter Nebenreaktionen in diesem Temperaturbereich nicht bevorzugt.

Die Initiatoren werden bevorzugt als Lösungen in organischen Lösemitteln wie z.B. Aceton während der Pfropfreaktion zudosiert. Die zu propfenden Monomeren der Gruppe a)3 werden als wäßrige Lösungen in die auspolymerisierte Lösung des Copolymeren aus den Monomeren der Gruppe a)1 und a)2 eindosiert, wobei die Reaktionstemperatur in einem Bereich zwischen 50°C und 95°C eingestellt wird. Zur Vermeidung der Gelbildung über radikalische Vernetzungsreaktionen wird die Konzentration des vorgelegten Mischpolymerisats ausreichend gering, vorzugsweise unterhalb 40% eingestellt. Außerdem soll die aktuell wirksame Konzentration des Pfropfinitiators ausreichend niedrig gehalten werden.

Die Mischpolymerisation mit den Monomeren der Gruppen a)1 und a)2 wird nach radikalischem Mechanismus in organischen Lösemitteln, die zumindest teilweise mit Wasser mischbar sind, in einem Temperaturbereich insbesondere zwischen 50°C und 95°C, bevorzugt 55°C - 70°C, durchgeführt. Als Lösemittel werden bevorzugt Aceton und dessen Gemische mit Wasser und niederen Homologen der Alkohole wie z.B. Ethanol verwendet. Zwecks Kettenlängenregelung können auch kleinere Anteile Isopropanol oder andere bekannte Regler eingesetzt werden.

Da diese Mischpolymeren aus weitgehend linearen Polymerketten aufgebaut sein sollen, werden zu ihrer Synthese bevorzugt Initiatoren eingesetzt, deren Radikale wegen ihres geringeren Energieinhalts keine oder nur selten Wasserstoffabstraktion an den Polymerketten verursachen und deren Pfropfwirksamkeit dementsprechend gegen 0 tendiert. Bevorzugt werden daher z.B. Azo-Initiatoren wie Azoisobuttersäuredinitril oder 2,2-Azobis-(2-methylbutyronitril) wendet.

Neben den unter a)1 und a)2 aufgezeigten Monomeren können auch andere mit diesen mischpolymerisierbare Monomere in untergeordnetem Maße für die Herstellung des Mischpolymers herangezogen werden. Hierzu werden Monomere, die Amidgruppen enthalten, wie z.B. (Meth)acrylamidderivate oder N-vinyllactame bevorzugt eingesetzt.

Der K-Wert der Polymeren (nach H. Fikentscher) soll zwischen 60 und 95 liegen.

Das entspricht einer relativen Viskosität von 2,031 - 4,871 bei 25°C.

Nach Mischen der Polymerlösung mit den unter b) beschriebenen Weichmachern soll der Anteil an Wasser im Lösemittelgemisch 50 Gew.-% nicht wesentlich überschreiten. Dies gilt besonders für direkte Beschichtungen der Haftklebelösung auf trennwirksame Oberflächen. Ein zu hoher Anteil von Wasser führt hierbei zu Benetzungsfehlern.

Besonders für scherfeste Haftkleberzubereitungen ist ein Zusatz von vernetzenden Verbindungen empfehlenswert. Die Vernetzungsdichte soll aber auf einen sehr niedrigen Grad eingestellt werden, damit die Repulpierbarkeit erhalten bleibt. Gut geeignet ist z.B. ein Derivat des Bisphenols A, bei dem zwei Glycidylreste durch Veretherung der OH-Gruppen an das Bisphenol gebunden sind. Aluminiumacetylacetonat ist ebenfalls geeignet. Die Vernetzersubstanzen sind insbesondere in einer Größenordnung von ca. 0,01 Gew.% - 1,5 Gew.% bezogen auf das Polymer und den Weichmacheranteil der Haftkleber einsetzbar.

Zur Erhöhung der Klebkraft können der Zubereitung polare Klebharze einzeln oder als Gemisch mit Säurezahlen insbesondere größer als 120 und ausreichender Löslichkeit in polaren Lösemitteln zugemischt werden. Ihr Anteil kann insbesondere zwischen 3 - 30 Gew.-% im Haftklebefilm liegen. Die Haftklebelösungen können mit den bekannten Methoden der Technik zu einseitig oder beidseitig klebenden Haftklebeartikeln verarbeitet werden.

Nachfolgend sind Prüfmethoden für derartige Haftklebefilme aufgeführt und zur weiteren Erläuterung der Erfindung Beispiele beschrieben.

### Prüfmethoden

### 1. Prüfung der Repulpierbarkeit.

Die Prüfung erfolgt gemäß Testverfahren Tappi UM 213 A für die Weideraufbereitbarkeit von wasserdispergierbaren Haftklebebändern. Das für die Verklebung verwendete Testpapier ist "James River Pulp Testing Paper white 417 - 01 - 50" der Curtis Paper Division. Die Wasserhärte beträgt 300 mg CaO/1 Liter H₂O entsprechend 30 dH.

### 2. Schertest statisch.

Es wird eine Haftklebeschicht durch Ausstreichen einer Haftkleberlösung auf einem Trennpapier und Trocknen der Schicht (25 min bei 95°C) hergestellt. Die Schichtstärke des getrockneten Films liegt zwischen 45µm - 55 µm. Aus diesem Film wird eine Verklebungsfläche von 13 x 20 mm geschnitten, die zwischen zwei Tiefdruckpapier-Streifen (Turbo-Press T54G Feldmühle AG) von 20 mm Breite und ca 100 mm Länge einkaschiert wird. Die langen Selten der rechteckigen Verklebungsfläche werden so angeordnet, daß sie parallel zu den Langseiten der Papierstreifen in 3,5 mm Abstand von den Streifenrändern verlaufen. Die durch fünfmaliges Überrollen einer 2 kg schweren Stahlwalze (0,2 m / sec) über die Verklebungsstelle hergestellten Spleiße werden 48 h bei 23°C und 55 % rel. Luftfeuchte (Normalklima DIN 50014-23/50-1) klimatisiert. Anschließend wird der Spleiß parallel zur Verklebungsfläche in Längsrichtung der Papierstreifen einer Zugkraft unterworfen. Es wird die Parallelverschiebungs-Strecke im Spleiß in Abhängigkeit zur Zeit (scherfeste Haftklebefilme) bei 10 N Zugbelastung oder die Zeit bis zum vollständigen Abscheren (Spleißbruch) der Verklebung (weiche Filme mit hohem Tack) bei 5 N Zugkraft gemessen.

### Klebkraft bei 180° Abzugswinkel:

Es werden Stahlplatten von der Größe 220 x 50 mm (ca. 2 mm Stärke) einseitig mit einem hoch rupffesten, sehr glatten, stark satinierten Etikettenpapier fest überklebt. Ein Haftklebefilm wird, wie beim Schertest statisch beschrieben, erzeugt und vom Trennpapier auf ein 55 g Streichrohpapier umkaschiert. Das derartig mit einem Haftklebefilm vom 45 - 55 µm Dicke ausgerüstete Streichrohpapier wird in 20 mm breite Streifen von ca. 300 mm Länge geschnitten. Die Streifen werden mit der haftklebenden Seite in Längsrichtung auf die Etikettenpapierfläche aufgelegt und mittels zehnmaligem Überrollen einer 2 kg schweren Stahlwalze (0,2 m / sec) mit dem Etikettenpapier verklebt. Die Prüfmuster werden 48 h bei 23°C und 55% rel. Luftfeuchte (Normklima) klimatisiert. Anschließend werden sie in eine Zugprüfmaschine eingespannt und die Abzugskraft zur Ablösung des Klebebandes vom Etikettenpapier unter 180°C Zugwinkel bei 300 mm / min Zuggeschwindigkeit bezogen auf 1 cm Verklebungsbreite ermittelt.

### Messung des Tacks.

Ein bandförmiges Prüfmuster vom 950 mm Länge und 15 mm Breite, das entsprechend den Prüfmustern für die Messung der Klebkraft hergestellt wird, wird auf dem Umfang (1 m ) eines Rades (Antriebsrad) fixiert, so daß die klebende Schicht nach außen weist. Ein Prüfrad wird auf seinem Umfang (196 mm) mit Etikettenpapier (Prüfgrund) beklebt und im oberen Scheitelpunkt senkrecht über der Drehachse auf das Antriebsrad so aufgelegt, daß die Drehachsen beider Räder exakt parallel liegen und die zu prüfende Klebschicht auf dem Antriebsrad an der Berührungsstelle mit dem Prüfrad vollständig in ihrer Breite vom Prüfgrund überdeckt ist. Der Auflagedruck des Prüfrades auf die Klebschicht wird mit einem Kontergewicht auf 5 g eingestellt. Danach wird das Antriebsrad mit einer Umfangsgeschwindigkeit von 16 cm / sec gedreht und die Zugkraft, die durch die haftende Klebmasse auf das aufliegende Prüfrad ausgeübt wird, über eine an der Achse des Prüfrades angreifende Kraftmeßdose ermittelt. Die Meßstrecke entspricht dem Umrang des Prüfrades. Es werden über die Meßstrecke gemittelte Werte angegeben.

### Experimeteller Teil

### Beispiel 1

### 1.1 Herstellung eines hydrophilen Gerüstpolymers

In eine 2 l fassende vakuumdichte Polymerisations-Stahlapparatur mit Rückflußkühler, Ankerrührer, Heizmantel und Dosiervorrichtungen werden 315 g Acrylsäure, 112,5 g 2-Ethylhexylacrylat, 250 Aceton, 100 g Ethanol und 100 g Wasser eingewogen. Nach Evakuieren, Spülen mit N₂ und Aufheizen auf 62°C wird unter Rühren eine Lösung von 0,6 g 2,2-Azo-bis-(2-methyl-butyronitril) in 6,4 g Aceton in das bei 600 hPa siedende Reaktionsmedium gegeben. Die Polymerisation setzt unter langsam absinkender Siedetemperatur und Anstieg der Viskosität ein. Nach einer Reaktionszeit von 30 min. werden bei 58°C erneut 0,5 g 2,2-Azo-bis-(2-methylbutyronitril), gelöst in einem Gemisch von 75 g Aceton, 50 g Ethanol und 50 g Wasser, zugeführt und der Druck auf 700 hPa angehoben. Nach weiteren 60 min. und erneutem Viskositätsanstieg werden bei 60°C weitere 75 g Aceton, 50 g Ethanol und 50 g Wasser zugegeben und der Druck auf 800 hPa erhöht. Eine erneute Verdünnung wird nach 120 min. bei 63°C und ca. 1000 hPa (Normaldruck) mit 75 g Aceton, 50 g Ethanol und 50 g Wasser vorgenommen. Die Polymerisation wird bei diesen Bedingungen unter Sieden der Lösung 60 min. fortgesetzt. Danach werden bei 62°C (Normaldruck) gleichzeitig je eine Lösung von 22,5 g SPA in 127,5 g entsalztem Wasser und eine Lösung von 1,5 g Bis-(4-tert.-butylcyclohexyl)-peroxidicarbonat in 13,5 g Aceton kontinuierlich verteilt über einen Zeitraum von 120 min. in die siedende Polymerlösung eindosiert. Danach wird die Reaktion bei 62°C Reaktionstemperatur zu Ende geführt und nach einer Gesamtreaktionszeit von 20 h auf RT abgekühlt. Während der gesamten Zeit werden mittels Durchsaugen eines schwachen N₂-Stroms evtl. vorhandene O₂-Mengen aus dem Reaktionsgemisch entfernt. Die erhaltene Polymerlösung ist wasserklar.

Der Polymergehalt beträgt 32,42 Gew.-%. Die rel.Visc. gemessen in absol. Methanol bei 25°C beträgt 3,363.

### 1.2 Herstellung einer repulpierbaren Haftklebemasse.

92,54 g (30 g Polymer) den entsprechend 1.1 hergestellten Polymerlösung werden mit 67,25 g eines ethoxilierten flüssigen primären Kokosfettamins (C₁₂) gemischt. Die Wasserstoffatome der Aminogruppe sind bei dieser weichmachenden Verbindung vollständig durch Ethoxiketten substituiert. Die Gesamtzahl der Ethoxieinheiten beträgt pro Aminofunktion durchschnittlich 15 (Handelsname Ethomeen C 25 Firma Akzo). In die Mischung wird unter Rühren eine Aufschlämmung von 2,5 g Polyesterfasern (Lange 6 mm, Durchm. 12 µm) in 78 g Isopropanol eingerührt. Anschließend werden 0,05 g des glycidylethers von Bisphenol A, gelöst in 117 g Aceton, in der Mischung gleichmäßig verteilt und durch Einrühren von 39 g Wasser eine klare streichfähige Haftkleberlösung erhalten.

### 1.3 Herstellung eines Haftklebefilms.

Die entsprechend 1.2 erhaltene Haftkleberlösung wird, wie im Abschnitt Prüfverfahren (2. Schertest statisch) beschrieben, auf einem einseitig trennwirksam ausgerüsteten Trennpapier auf die trennwirksame Oberfläche ausgestrichen und zu einem Film von 50 um Dicke getrocknet.

Testergebnisse am Frischmuster (nach 48 h Lagerung im Normalklima DIN 50014-23/50-1):
Repulpierbarkeit: Einwandfrei, die erhaltenen Papiertestscheiben zeigen keinerlei Klebrigkeit oder Stippen.

Das gleiche Ergebnis wird nach einer Temperaturbelastung des Haftklebefilms von 80 min. bei 120°C erhalten.

Schertest statisch: Nach einer Scherbelastung von 5000 min. bei 10 N/cm Zugkraft ist keine Verschiebung, kein Aufbrechen oder Abscheren des Spleißes festzustellen.

Das gleiche Ergebnis wird unter Temperaturbelastung des Haftklebefilms von 120°C erhalten.
Klebkraft bei 180°C Abzugswinkel: 3,55 N/cm.
Tack: 0,1 N/cm.

### BEISPIEL 2

### 2.1 Herstellung eines hydrophilen Gerüstpolymers.

In eine 2 l fassende, vakuumdichte Polymerisationsapparatur entsprechend Beispiel 1 werden 225 g Acrylsäure, 202,5 g 2-Ethylhexylacrylat, 400 g Aceton und 50 g Ethanol eingewogen. Nach Evakuieren, Spülen mit N₂ und Aufheizen auf 62°C wird unter Rühren eine Lösung von 0,5 g 2,2-Azo-bis-(2-methyl-butyronitril) in 8 g Aceton in das bei 650 hPa siedende Reaktionsmedium gegeben. Die Polymerisation beginnt unter langsam absinkender Siedetemperatur und ansteigender Viskosität des Reaktionsgemisches. Nach einer Reaktionszeit von 50 min. werden bei 58°C erneut 0,5 g 2,2-Azo-bis-(2-methyl-butyronitril) gelöst in 150,0 g Aceton und 25,0 Ethanol zugegeben. Die Polymerisation wird unter Sieden des Reaktionsgemisches bei 60°C und 800 hPa fortgesetzt. Nach weiteren 100 min. Reaktionszeit werden 150,0 g Aceton und 25 g Ethanol als Verdünnungsmittel zugegeben und der Druck auf Normaldruck eingestelit. Die Polymerisation wird unter Sieden bei 59°C-60°C weitere 180 min. fortgesetzt. Danach werden bei 60°C gleichzeitig je eine Lösung von 22,5 g SPA in 127,5 g entsalztem Wasser und eine feinteilige Dispersion von 4 g Bis-(4-tert.-butylcyclohexyl)-peroxidicarbonat in 6 g Wasser in einem Zeitraum von 120 min. in das siedende Reaktionsgemisch dosiert. Die Reaktion wird bei 61°C mit einer Gesamtreaktionszeit von 20 h zu Ende geführt. Entsprechend Beispiel 1 wird während der Polymerisation für eine inerte Atmosphäre im Reaktionsraum gesorgt. Nach dem Abkühlen wird die Polymerlösung mit 175 g entsalztem Wasser und 50 g Ethanol verdünnt.

Der Polymergehalt beträgt 30,07 Gew.-%, die rel. Visc. gemessen in Methanol/Wasser 4,00 : 1,20 bei 25°C beträgt 2,500.

### 2.2 Herstellung einer Haftklebemasse

94,8 g (28,5 g Polymer) der entsprechend 2,1 hergestellten Polymerlösung werden mit 60,4 g des im Beispiel 1 unter 1.2 beschriebenen wasserlöslichen Weichmachers gemischt. Hierzu wird eine Lösung von 3,0 g eine Klebharzes (unverestertes Kolophoniumharz mit Säurezahl im Bereich von 170) in 66,7 g Aceton gemischt. Anschließend wird eine Aufschlemmung von 3 g Polyester-Fasern entsprechend Beispiel 1 in 51 g Isopropanol und 25 g Wasser eingerührt. Vor dem Ausstreichen wird eine Lösung von 0,05 g der im Beispiel 1 beschriebenen Diglycidyl-Verbindung in 10 g Aceton gleichmäßig in der Mischung verteilt.

### 2.3 Herstellung eines Haftklebfilms

Die gemäß 2.2 erhaltene Haftklebelösung wird, wie im Abschnitt Prüfverfahren beschrieben zu einem Haftklebefilm aufgearbeitet.

Testergebnisse am Frischmuster (nach 48 h Lagerung im Normalklima DIN 50014 -23/50-1):

Repulpierbarkeit: Einwandfrei, die erhaltenen Papiertestscheiben zeigen keinerlei Klebrigkeit oder Stippen.

Das gleiche Ergebnis wird nach einer Temperaturbelastung des Haftklebfilms von 80 min. bei 120°C erhalten.

Schertest statisch: Der Spleiß überdauert bei 25°C und einer Belastung von 5,0 N/cm 100 min.

Das gleiche Ergebnis wird unter Temperaturbelastung des Haftklebefilms von 120°C erhalten.
Klebkraft bei 180° Abzugswinkel: 4,97 N/cm.
Tack: 0,56 N/cm.

## Patentansprüche

1. Repulpierbarer Haftkleber auf Basis eines Pfropfpolymeren, in welchem bezogen auf das Pfropfcopolymere 3 - 20 Gew.-% Vinylverbindungen mit sulfonsauren Salzgruppen auf ein Mischpolymer enthaltend (Meth) acrylester und (Meth)acrylsäure, aufgepfropft sind, und das mit wasserlöslichen Weichmachern, haftklebrig eingestellt ist.

2. Repulpierbarer Haftkleber nach Anspruch 1, dadurch gekennzeichnet, daß das Mischpolymer aus Acrylsäure und Acrylsäurealkylestern mit 1-12 C-Atomen in der möglichst gering verzweigten Alkylkette besteht.

3. Repulpierbarer Haftkleber nach Anspruch 1, dadurch gekennzeichnet, daß das Mischpolymer zusätzlich untergeordnete Mengen von mischpolymerisierbaren Monomeren, wie (meth)acrylamid-Derivaten oder N-Vinyllactamen enthält.

4. Repulpierbarer Haftkleber nach Anspruch 1, dadurch gekennzeichnet, daß das Mischpolymer 15 - 95 Gew.-% (Meth)acrylsäure enthält.

5. Repulpierbarer Haftkleber nach Anspruch 1, dadurch gekennzeichnet, daß die auf das Mischpolymer zu pfropfenden Monomere bevorzugt (Meth)acrylester mit sulfonsauren Salzgruppen am Alkylrest sind.

6. Repulpierbarer Haftkleber nach Anspruch 1, dadurch gekennzeichnet, daß der Haftklebefilm schwach vernetzt ist.

7. Repulpierbarer Haftkleber nach Anspruch 1, dadurch gekennzeichnet, daß er bei Raumtemperatur flüssige Polyethylenglykole, Polypropylenglykole, deren Mischungen oder Mischpolymerisate oder ethoxilierte bzw. propoxilierte Alkylamine mit Alkylresten von C₄-C₁₈ als Weichmacher enthält.

8. Repulpierbarer Haftkleber nach Anspruch 1, dadurch gekennzeichnet, daß der Anteil an Weichmachern 40 - 75 Gew.-% im Haftklebefilm beträgt.

9. Repulpierbarer Haftkleber nach Anspruch 1, dadurch gekennzeichnet, daß er zur Erhöhung der Klebkraft 3 - 30 Gew.-% polare Klebharze enthält.

10. Repulpierbarer Haftkleber nach Anspruch 1, dadurch gekennzeichnet, daß die enthaltenen Carboxylgruppen teilweise oder vollständig neutralisiert sind.

11. Verwendung des nach Anspruch 1 hergestellten Haftklebers und damit hergestellte Artikel für haftklebende Anwendungen, insbesondere solchen, bei denen Papierträger verwendet werden und ein Repulpieren erfolgt.

12. Verwendung des nach Anspruch 1 hergestellten Haftklebers zusammen mit einen Papierträger für selbstklebende Bänder, Etiketten oder haftklebende Artikel.

## Revendications

1. Adhésif recyclable tous forme de pâte, sensible à la pression à base d'un polymère greffé, dans lequel, sur la base du copolymère greffé, sont greffés, sur un polymère mixte contenant des esters (méth)acryliques et de l'acide (méth)acrylique, 3 - 20 % en poids de composés vinyliques avec des groupements salins d'acides sulfoniques, et qui est ajusté à l'aide de plastifiants hydrosolubles pour être adhésif sous pression.

2. Adhésif recyclable sous forme de pâte, sensible à la pression selon la revendication 1, caractérisé en ce que le polymère mixte se compose d'acide acrylique et d'esters alkyles de l'acide acrylique ayant 1-12 atomes de C dans la chaîne la moins ramifiée possible.

3. Adhésif recyclable sous forme de pâte, sensible à la pression selon la revendication 1, caractérisé en ce que le polymère mixte contient en plus des quantités subsidiaires de monomères susceptibles de polymérisation de mélange, comme des dérivés de la (méth)acrylamide ou des lactames N-vinyliques.

4. Adhésif recyclable sous forme de pâte, sensible à la pression selon la revendication 1, caractérisé en ce que le polymère mixte contient 15 - 95 % en poids d'acide (méth)acrylique.

5. Adhésif recyclable sous forme de pâte, sensible à la pression selon la revendication 1, caractérisé en ce que les monomères à greffer sur le polymère mixte sont de préférence des esters (méth)acryliques ayant des groupements salins d'acides sulfoniques sur le résidu alkyle.

6. Adhésif recyclable sous forme de pâte, sensible à la pression selon la revendication 1, caractérisé en ce que le film d'adhésif sensible à la pression est faiblement réticulé.

7. Adhésif recyclable sous forme de pâte, sensible à la pression selon la revendication 1, caractérisé en ce qu'il contient, en tant que plastifiant, des polyéthylèneglycols, des polypropylèneglycols liquides à température ambiante, leurs mélanges ou leurs polymérisats mixtes ou des alkylamines éthoxylées, respectivement propoxylées, ayant des résidus alkyles en C₄-C₁₈.

8. Adhésif recyclable sous forme de pâte, sensible à la pression selon la revendication 1, caractérisé en ce que la proportion de plastifiants est de 40 - 75 % en poids dans le film d'adhésif sensible à la pression.

9. Adhésif recyclable sous forme de pâte, sensible à la pression selon la revendication 1, caractérisé en ce qu'il contient en vue de l'augmentation de la force adhésive, 3 - 30 % en poids de résines adhésives polaires.

10. Adhésif recyclable sous forme de pâte, sensible à la pression selon la revendication 1, caractérisé en ce que les groupements carboxyles contenus sont partiellement ou complètement neutralisés.

11. Utilisation d'un adhésif sensible à la pression selon la revendication 1, en vue d'applications d'adhésion sous pression, en particulier d'applications lors desquelles on utilise des supports en papier et lors desquelles un recyclage a lieu.

12. Utilisation d'un adhésif sensible à la pression selon la revendication 1, conjointement à un support papier en vue de bandes, d'étiquettes ou d'articles adhérant sous pression auto-adhésifs.

## Claims

1. Repulpable contact adhesive based on a graft polymer in which, relative to the graft copolymer, 3-20% by weight of vinyl compounds having sulphonic acid salt groups are grafted onto a copolymer comprising (meth)acrylates and (meth)acrylic acid, and which has been rendered tacky by means of water-soluble plasticizers.

2. Repulpable contact adhesive according to Claim 1, characterized in that the copolymer consists of acrylic acid and alkyl acrylates having 1-12 C atoms in the alkyl chain, which exhibits as little branching as possible.

3. Repulpable contact adhesive according to Claim 1, characterized in that the copolymer additionally contains minor amounts of copolymerizable monomers, such as (meth)acrylamide derivatives or N-vinyllactams.

4. Repulpable contact adhesive according to Claim 1, characterized in that the copolymer contains 15-95% by weight of (meth)acrylic acid.

5. Repulpable contact adhesive according to Claim 1, characterized in that the monomers to be grafted onto the copolymer are preferably (meth)acrylates having sulphonic acid salt groups on the alkyl radical.

6. Repulpable contact adhesive according to Claim 1, characterized in that the contact adhesive film is weakly crosslinked.

7. Repulpable contact adhesive according to Claim 1, characterized in that it contains polyethylene glycols which are liquid at room temperature, polypropylene glycols, mixtures thereof or copolymers or ethoxylated or propoxylated alkylamines having alkyl radicals of C₄-C₁₈ as plasticizers.

8. Repulpable contact adhesive according to Claim 1, characterized in that the amount of plasticizers in the contact adhesive film is 40-75% by weight.

9. Repulpable contact adhesive according to Claim 1, characterized in that it contains 3-30% by weight of polar adhesive resins in order to increase the adhesive power.

10. Repulpable contact adhesive according to Claim 1, characterized in that some or all of the carboxyl groups present have been neutralized.

11. Use of a contact adhesive according to Claim 1, for contact adhesive applications, in particular those in which paper substrates are used and repulping is carried out.

12. Use of a contact adhesive according to Claim 1, together with a paper substrate, for self-adhesive tapes, labels or contact adhesive articles.
